# EUROPEAN PATENT SPECIFICATION

(11) **EP 3 995 324 B1**
(45) Date of publication and mention of the grant of the patent: **04.10.2023**
(21) Application number: 21205992.7
(22) Date of filing: 02.11.2021
(51) Int. Cl.: B60C 11/03, B60C 11/13

(54) **TIRE WITH ONE OR MORE RECESSES IN THE LATERAL GROOVES OF AT LEAST ONE SHOULDER PORTION**
REIFEN MIT EINER ODER MEHREREN AUSSPARUNGEN IN DEN SEITLICHEN RILLEN VON MINDESTENS EINEM SCHULTERTEIL
PNEU AVEC UN OU PLUSIEURS RENFONCEMENTS DANS LES RAINURES LATÉRALES D'AU MOINS UNE PARTIE D'ÉPAULEMENT

(30) Priority: 06.11.2020 US 202063110465 P; 13.09.2021 US 202117472865
(43) Date of publication of application: 11.05.2022
(73) Proprietor: The Goodyear Tire & Rubber Company, Akron, OH 44316 (US)
(72) Inventor: GRAUEL, Bastian Andreas, D-63628 Bad Soden-Salmuenster (DE)
(74) Representative: Kutsch, Bernd

(56) References cited:
- WO-A1-2019/098307
- JP-A- 2006 143 134
- US-A1- 2008 053 585
- US-A1- 2015 273 951
- US-A1- 2019 023 079
- US-A1- 2019 176 537
- US-B1- 6 481 480

## Description

### Technical Field

The present invention relates to a tire and in particular to a tire that can be used as all-season tire or winter tire.

### Technical Background

All-season tires require a satisfactory level of running performance on snow covered and icy road surface as well as dry and wet road surfaces. To improve the on-snow performance, the tread portion is provided with a lot of lateral grooves extending in the tire tread width direction. The lateral grooves generate on-snow traction (snow shearing force) by compacting snow on a road surface in the lateral grooves and then shearing it. Further, edges of the lateral grooves generate frictional force by scratching the compacted snow on a road surface. However, the presence of lateral grooves tends to deteriorate the stiffness of the tire.

Several ways have been already studied to enhance the performance of winter tires or all-season tires. For instance, EP-A-0 455 925 provides for an all-season type tire tread that comprises a plurality of laterally extending grooves having curved portions adjacent to each lateral edge of the tread, said curved portions extending in circumferentially opposite directions. Axially spaced zig-zag shaped grooves extend circumferentially around the tread, every fourth leg of a zig-zag groove being coincident with a portion of a laterally extending groove. Two legs adjacent to said fourth leg connects the laterally extending grooves to short semi-blind grooves having their central portion coincident with every other fourth leg of the zig-zag shaped groove. The various grooves cooperate to define block elements, arranged in circumferential rows and having the shape of an "S" or a "Z". The blocks can include a plurality of slots and humps can be located between neighbouring blocks.

EP-A-3 560 732 provides for a tire comprising a tread portion having a land region including a ground-contacting surface defined between a first vertical edge and a second vertical edge and a lateral groove including a first portion extending from the first vertical edge, a second portion extending from the second vertical edge, and a connection portion connecting therebetween. The connection portion is a portion between a first small edge protruding circumferentially from the first portion and a second small edge protruding toward a circumferentially opposite side to the first small edge. A length in the tyre circumferential direction of each of the first and second small edges is smaller than a maximum groove width of each of the first and second portions. At least a part of the connection portion has a raised bottom portion having a depth smaller than that of the lateral groove at the first and second vertical edges.

To reduce the noise in all-seasons tires, EP-A-1 920 949 provides for a pneumatic tire having a tread extending along the circumferential length of the tire. The tread is divided into at least two different regions across the width of the tread and has a plurality of tread elements. Each tread element has a pitch length as measured along the circumferential length of the tire. In each of the tread regions, different pitching methods are employed.

The above tires already provide good performances but there is a need to further improve the performance of the all-season tires and winter tires in particular regarding the stiffness of the tire and the on-snow traction performance. There is a need to further improve the winter and all-season tire's performance regarding the stiffness of the tire, the on-snow traction performance, the noise performance and the water behaviour (i.e. performance in wet road surface).

There is a need to provide a tire that shows at the same time good stiffness and good winter or all-season traction performances, i. e. on wet, dry and snow surfaces and in particular on snow surfaces. There is also a need to provide a tire that shows at the same time good stiffness and good winter or all-season traction performances, and in particular, good on-snow performance and that also show good water behaviour and good noise performance, i.e. with reduced noise.

US 2008/053585 A1 describes a tire in accordance with the preamble of claim 1.

Tires having a recess or a varying lateral groove depth in the shoulder portion of a tire are also known from JP 2006 143134 A, US 2015/273951 A1, US 2019/023079 A1, WO 2019/098307 A1, US 2019/176537 A1 and US 6,481,480 B1.

### Summary of the Invention

The invention relates to a tire in accordance with claim 1.

Dependent claims refer to preferred embodiments of the invention.

One or more of the above needs can be fulfilled by the tire according to the invention wherein the lateral grooves of the outer shoulder portion and/or inner shoulder portion have a depth that is reduced by comparison to the usual lateral grooves depth's but shows one or more recesses distributed along their length to improve the snow scratching and thereby the on-snow traction performance. This allows having a good comprise between stiffness and good winter or all-season traction performance and in particular good on-snow performance. It is understood that according to the invention, the presence of one or more recesses in a lateral groove is allowed by said reduced depth. The depth of the one or more recesses is larger than the depth of the lateral groove in which the one or more recesses are placed.

Lateral grooves with a change of depth along their length are disclosed in US D490,045. In this document, the lateral grooves of the outer shoulder portion have two sub-portions wherein the sub-portion that connect with the outside main circumferential groove (i. e. including the internal end of the lateral groove) is deeper than the other sub-portion. This is different from the tire of the present invention wherein one or more recesses are formed in the lateral grooves at a distance from the internal end of the lateral groove and the technical effect associated is not the same.

The following can be used to further define the tire according to the invention. In the present description, the lateral groove refers to the lateral groove of the outer shoulder portion and/or to the lateral groove of the inner shoulder portion, unless specified otherwise.

The tire may be a pneumatic tire or a non-pneumatic tire. Preferably, it is a pneumatic tire.

In a preferred aspect of the invention, apart from the one or more recesses, the lateral grooves have a constant depth along their length.

In a preferred aspect of the invention, the depth of the lateral grooves comprising one or more recesses of the outer shoulder portion is ranging from 50%to 85% of the depth of the outside main circumferential groove and/or the depth of the lateral grooves comprising one or more recesses of the inner shoulder portion is ranging from 50% to 85% of the depth of the inside main circumferential groove.

In a preferred aspect of the invention, the depth of the lateral grooves comprising one or more recesses of the outer shoulder portion is ranging from 60% to 85% of the depth of the outside main circumferential groove; for example, 55% to 85% or 60% to 85% or from 60% to 80% or from 60% to 75% or from 60% to 70% or from 65% to 75%.

In a preferred aspect of the invention, the depth of the lateral grooves comprising one or more recesses of the inner shoulder portion is ranging from 60% to 85% of the depth of the inside main circumferential groove; for example, 55% to 85% or 60% to 85% or from 60% to 80% or from 60% to 75% or from 60% to 70% or from 65% to 75 %.

In a preferred aspect of the invention, the outside main circumferential groove and/or the inside main circumferential groove have a constant depth which is ranging from 5.8 to 7.7 mm, from example from 6.0 mm to 7.5 mm, for example from 6.2 mm to 7.3 mm, for example from 6.5 mm to 7.0 mm, or from 6.7mm to 7.0 mm.

In a preferred aspect of the invention, the lateral grooves comprising one or more recesses of the outer shoulder portion and/or of the inner shoulder portion have a depth that is reduced by comparison to lateral grooves devoid of a recess when present in the tire. For example, in an embodiment wherein the outer shoulder portion and/or the inner shoulder portion comprise lateral grooves devoid of a recess; the depth of the lateral grooves devoid of a recess is ranging from 120% to 180% of the depth of the lateral groove comprising one or more recesses, preferably, from 130% to 170%, more preferably from 140% to 160%, even more preferably from 145% to 155 %.

In a preferred aspect of the invention, the depth of the one or more recesses of the outer shoulder portion and/or of the inner shoulder portion is the same than the depth of the lateral grooves devoid of a recess.

In a preferred aspect of the invention, the cumulated (or aggregated) length of the one or more recesses in the lateral groove is at least 25% of the total lateral groove length in the footprint; for example, at least 28% for example, at least 30%.

In a preferred aspect of the invention, the cumulated length of the one or more recesses in the lateral groove is at most 60% of the total lateral groove length in the footprint; for example, at most 50%; for example, at most 45%; for example, at most 40%; for example, at most 35%.

In a preferred aspect of the invention, the cumulated length of the one or more recesses in the lateral groove is ranging from 20% to 50% of the total lateral groove length in the footprint; for example, from 20% to 45%; for example, from 25% to 45%; for example, from 25% to 40%; for example, from 28% to 35% or from 30% to 35%.

In a preferred aspect of the invention, the depth of the one or more recesses is at least 120% of the depth of the lateral groove; for example, at least 130%; for example, at least 140%; for example, at least 145%.

In a preferred aspect of the invention, the depth of the one or more recesses is at most 180% of the depth of the lateral groove; for example, at least 170%; for example, at least 160%; for example, at least 155%.

In a preferred aspect of the invention, the depth of the one or more recesses is ranging from 130 to 170 of the depth of the lateral groove; for example, from 140% to 160%; for example, from 145 to 155 %.

At least one recess has a constant depth along its length; preferably, all the recesses have a constant depth along their length, so that the one or more recesses have a constant depth along their length. The length direction of the one or more recess is parallel to the length direction of the lateral groove.

In a preferred aspect of the invention, the one or more recesses are placed at a distance from the external end of the lateral groove that is at least 15% of the total lateral groove length in the footprint; for example, at least 20%; for example, at least 25%; for example, at least 30%.

In a preferred aspect of the invention, the one or more recesses are placed at a distance from the internal end of the lateral groove and/or at a distance from the external end of the lateral groove that is at most 35% of the total lateral groove length in the footprint; for example, at most 30%.

In a preferred aspect of the invention, the one or more recesses are placed at a distance from the internal end and/or at a distance from the external end of the lateral groove that is ranging from 10% to 35% of the total lateral groove length in the footprint; for example, from 20% to 30%.

In a preferred aspect of the invention, the one or more recesses are placed at a distance from both the internal end and the external end of the lateral groove so that the one or more recesses are closed in the footprint.

In a preferred aspect of the invention, the outer shoulder portion and/or the inner shoulder portion comprises at least one relatively narrow groove extending in the circumferential direction of the tire, wherein said at least one relatively narrow groove crosses a respective lateral groove in a section of the respective lateral groove that is extending from the axially inner end of the respective lateral groove to a recess. Preferably, the relatively narrow circumferential groove has the same radial depth than the respective lateral groove or has a radial depth of at least 110% of the radial depth of the respective lateral groove.

In a preferred aspect of the invention, the lateral grooves and the circumferential grooves form blocks, wherein each block is comprising one or more sipes extending in the width direction of the tire.

In a preferred aspect of the invention, the lateral grooves and the circumferential grooves form blocks, wherein each block comprises one or more sipes and the sipes are connecting the narrow circumferential groove. This feature allows for improving the wet and dry traction behaviour of the tire.

In a preferred aspect of the invention, the lateral grooves and the circumferential grooves form blocks each block is comprising one or more sipes and the sipes are connecting the narrow circumferential groove and are distributed asymmetrically from one side to the other of said narrow circumferential groove. This feature allows for improving the wet and dry traction behaviour of the tire and the stiffness of the tire.

In a preferred aspect of the invention, at least one of the outer shoulder portion and the inner shoulder portion has at least one lateral groove comprising a single recess.

In a preferred aspect of the invention, only one selected from the outer shoulder portion and the inner shoulder portion has at least one lateral groove comprising one or more recesses. Alternatively, both the outer shoulder portion and the inner shoulder portion have at least one lateral groove comprising one or more recesses.

In a preferred aspect of the invention, the tire is an all-season tire or a winter tire. Preferably, it is an all-season tire. More preferably, the tire is an all-season tire or a winter tire and shows a "three-peak mountain snowflake" symbol (i. e. "3PMSF" symbol).

In a tire according to the present invention at least one lateral groove of the outer shoulder portion shows an extension extending from its internal end to the outside main circumferential groove and/or at least one lateral groove of the inner shoulder portion shows an extension extending from its internal end to the inside main circumferential groove wherein the extension has a width smaller than the width of the lateral groove. This feature allows for improving the noise performance of the tire. The lateral groove showing an extension extending from its internal end is semi-blind in the context of the present invention. For example, the extension has a width that is at most 50% the width of the lateral groove; for example, at most 40%; for example, at most 30%.

In a preferred aspect of the invention, the lateral grooves and the circumferential grooves form blocks each block is comprising one or more sipes extending in the width direction of the tire and the extension and the sipes have the same width.

In a preferred aspect of the invention, the extension of the lateral groove of the outer shoulder portion and/or of the lateral groove of the inner shoulder portion has a depth similar or superior to the depth of the lateral groove from which it extends. This feature allows for improving the wet and dry traction behaviour performance of the tire.

### Definitions

"Tire footprint" means the contact patch or area of contact of the tire tread with a flat surface at zero speed and under normal load and pressure. ASTM F870-94:2016 is to be used to obtain a tire footprint impression (synonymous to a tread footprint impression) and the measurements in the tire footprint such as the void area defining the grooves. The length and the width of the grooves are determined from the footprint impression. In particular, the lateral groove length can be measured directly on the footprint impression, i.e. on the footprint (used hereafter as a synonym).

"Asymmetric tread" means a tread that has a tread pattern not symmetrical about the centre plane or the equatorial plane of the tire.

"Symmetric tread" means a tread that has a tread pattern symmetrical about the centre plane or the equatorial plane of the tire.

"Circumferential" means lines or direction extending along the perimeter of the surface of the annular tread perpendicular to the axial direction.

"Lateral groove" is a groove that has its long dimension oriented at a direction non-parallel to the tire circumferential centreline. A lateral groove can be open into a void at both ends or be semi-blind in case it shows an extension at one of its ends. For example, the lateral grooves can extend according to the axial direction of the tire or according to a direction obliquely outward the tire tread width direction.

"Axial" means lines or directions that are parallel to the axis of rotation of the tire.

"Groove" means an elongated void area in a tread that can extend circumferentially or laterally about the tread in a straight, curved, or zigzag manner. Circumferentially and laterally extending grooves sometimes have common portions.

The "groove width" is equal to tread surface area occupied by a groove or groove portion, the width of which is in question, divided by the length of the groove or groove portion in question. Thus, the groove width is its average width over its length.

The "void area" is a portion of the tire footprint is that is not contacted by ribs or blocks.

The grooves may be of varying depth in a tire. The "depth" of a groove may vary along its length or be constant. The depth of one groove may be constant but varies from the depth of another groove in the tire. Narrow or wide lateral groove has a depth that is reduced compared to the main circumferential grooves which they interconnect.

"Sipes" means small slots moulded into the tread elements that subdivide the tread surface and improve traction. A sipe is narrower than a groove.

"Tread element" or "traction element" means a rib or a block element defined by having a shape adjacent groove.

"Rib" means a circumferentially extending strip of rubber on the tread which is defined by at least one circumferential groove and either a second groove or a lateral edge. The strip is laterally divided by circumferential grooves.

"Lateral edge" means a line tangent to the laterally outermost or innermost tread contact footprint as measured under normal load and tire inflation, the line being parallel to the equatorial centre plane.

"Equatorial centre plane" means the plane perpendicular to the tire axis of rotation and passing through the centre of the tread.

### Brief Description of the Drawings

Figure 1 is a plan view of a tire with a tread according to the invention.
Figure 2 is an enlarged partial view of a tread portion of the tire of Figure 1.
Figure 3 is an enlarged elevated view of a portion of the outer shoulder portion of the tire of Figure 1.

### Detailed Description of Preferred Embodiments of the Invention

In the below description the footprint is obtained according to ASTM F870-94:2016.

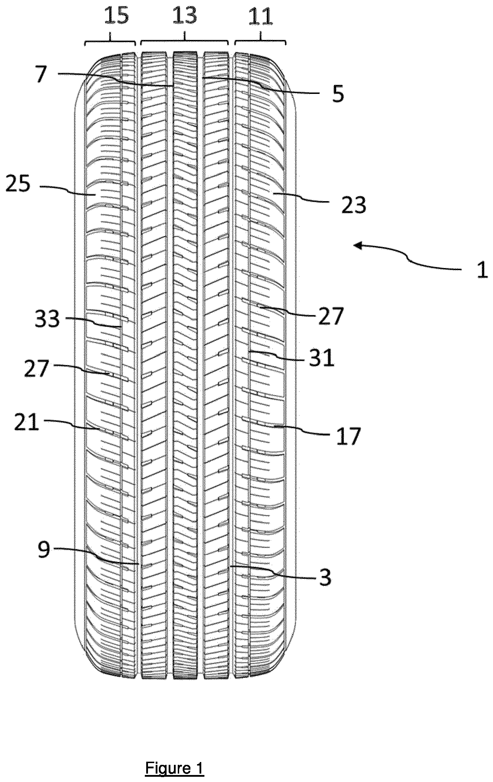

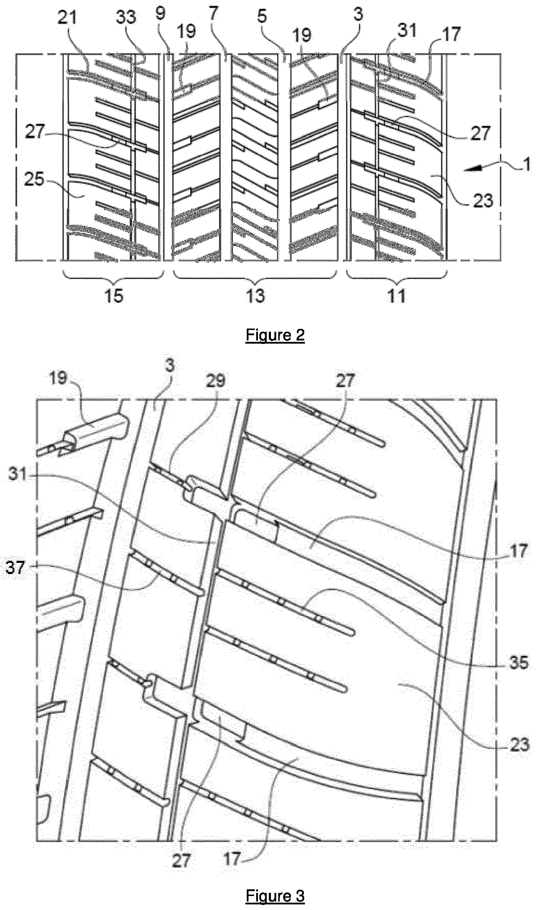

Reference is made to Figure 1 that illustrates a tire 1 according to a preferred embodiment of the invention, and Figure 2 that is a partial view of the tread portion of the tire 1. The tire 1 includes a tread portion extending in a tire width direction, a pair of sidewall portions (not shown) extending inward in a tire radial direction from both ends of the tread portion and a pair of bead portions (not shown) each provided at an inner end of a corresponding one of the pair of sidewall portions in the tire radial direction. In the tread portion, a plurality of ribs is formed by a plurality of main circumferential grooves (i. e. extending in the tire circumferential direction). The tire can be a pneumatic tire or a non-pneumatic tire; with preference, the tire is a pneumatic tire.

For example, the tire is an all-season tire or a winter tire, with preference an all-season tire. For example, the tire is an all-season pneumatic tire or a winter pneumatic tire, with preference an all-season pneumatic tire. For example, the tire is an all-season tire or a winter tire and shows a "three-peak mountain snowflake" symbol (i.e. "3PMSF" symbol).

The tread pattern of the tire can be symmetric or asymmetric. For example, the tire has an asymmetric tread.

The tire includes from two to four main grooves extending in the tire circumferential direction arranged from an outside (i. e. the right side in Figure 1) to an inside (i. e. the left side in Figure 1). The distinction between outside and inside side of the tire is relevant in the embodiment wherein the tire has an asymmetric tread pattern. In such a case, the tires show marks to differentiate the two sides so that the side marked "outside" is towards the outside of the vehicle and the "inside" side towards the inside when the tire is mounted on the vehicle. The person skilled in the art will adapt the below description without any difficulty to the embodiment wherein the tread pattern of the tire is symmetric, with the outer shoulder portion being symmetrical to the inner shoulder portion the equatorial plane of the tire. Tires with symmetric tread pattern are devoid of marks to differentiate the two sides. On Figures 1 and 2, the tire comprises four main grooves 3, 5, 7, 9 extending in the tire circumferential direction. The main circumferential grooves are depressed inward in the tire radial direction.

An outside main circumferential groove 3 is provided on the outside. The outermost region in the tire tread width direction defined by the outside main circumferential groove 3 and the outside lateral edge is the outer shoulder portion 11 (or outside rib). The outside main circumferential groove 3 can be straight (as illustrated in Figure 1) or can extend in a zig-zag shape in the tire circumferential direction (not shown). In the latter configuration, when the outside main circumferential groove is extending in a zig-zag shape in the tire circumferential direction; the outside main circumferential groove includes a first inclined portion extending in the tire circumferential direction and obliquely outward the tire tread width direction, and a second inclined portion extending in the tire tread width direction.

An inside main circumferential groove 9 is provided on the inside. The innermost region in the tire tread width direction defined by the inside main circumferential groove and the inside lateral edge is the inner shoulder portion 15 (or inside rib). The inside main circumferential groove 9 extends on the same circumference in the tire circumferential direction. The inside circumferential main groove 9 can be straight or in a zig-zag shape. In an embodiment, the inside main circumferential groove 9 is a straight groove extending in the circumferential direction.

The portion disposed between the outside main circumferential groove 3 and the inside main circumferential groove 9 forms the central portion 13 of the tire 1. The central portion 13 may be devoid of a main circumferential groove; however, it is preferred that one or two main central circumferential grooves 5, 7 are placed in the central portion 13 of the tire. In an embodiment (not shown) a single main groove is extending in the circumferential direction, the single main circumferential groove can be straight or can extend in a zig-zag shape. The single main circumferential groove is preferably disposed at the centre in the width direction of the tire. In the embodiment illustrated in Figures 1 and 2, the central portion 13 comprises two main grooves 5, 7 extending in the circumferential direction and defining three central ribs with the outside main circumferential groove and the inside main circumferential groove. The central main circumferential grooves 5, 7 can be straight or in a zig-zag shape. In an embodiment, the central main circumferential grooves 5, 7 are straight.

The outer shoulder portion 11, the central portion 13 and the inner shoulder portion 15 comprise each a plurality of lateral grooves 17, 19, 21 that extends in the width direction of the tire 1. The first lateral grooves 17 are formed in the outer shoulder portion 11. The second lateral grooves 19 are formed in the central portion 13. The third lateral grooves 21 are formed in the inner shoulder portion 15. The lateral grooves 17, 19, 21 are all depressed inward in the tire radial direction and all extend obliquely in the tire tread width direction. In an embodiment not shown the lateral grooves of the outer shoulder portion and/or of the inner shoulder portion extend in an axial direction. Each lateral groove 17, 19, 21 is showing two ends in the footprint. In particular, each of the outer shoulder portion 11 and the inner shoulder portion 15 comprises lateral grooves 17, 21 having two ends in the footprint. As regards to the lateral grooves 17, 21 of the outer and inner shoulder portion 11, 15, the end that is closer to the central portion 13 of the tire 1 is the internal end and the end farther to the central portion 13 of the tire 1 is the external end. The lateral grooves 17, 21 of the outer and inner shoulder portion 11, 15 remain open in the footprint by their external end on their respective lateral edge. The lateral grooves 17, 21 of the outer and inner shoulder portion 11, 15 can be straight or curved, they are preferably straight.

The outer shoulder portion 11 is described by reference to Figure 3. The description of the outer shoulder portion 11 can be adapted by the person skilled in the art by analogy to the inner shoulder portion 15. The outer shoulder portion 11 (or the inner shoulder portion 15) shows a plurality of lateral grooves 17 (referenced 21 in the inner shoulder portion 15) that extend obliquely outward in the tire tread width direction and the same tire circumferential direction. The plurality of lateral grooves 17 defines with the outside main circumferential groove 3 a plurality of blocks 23 (referenced 25 in the inner shoulder portion 15).

According to the invention, at least one of the lateral grooves 17 of the outer shoulder portion 11 and/or the lateral grooves 21 of the inner shoulder portion 15 show one or more recesses 27 extending along the length of the lateral grooves 17, 21. The one or more recesses 27 are formed in the bottom of the lateral grooves 17, 21.

Preferably, at least 30% of the lateral grooves 17 of the outer shoulder portion 11 and/or the lateral grooves 21 of the inner shoulder portion 15 show one or more recesses 27; preferably at least 50 %, preferably at least 80 %, the remaining lateral grooves being devoid of a recess. In an embodiment, all the lateral grooves 17 of the outer shoulder portion 11 and/or the lateral grooves 21 of the inner shoulder portion 15 show one or more recesses 27.

It is preferred that the lateral grooves comprising one or more recesses of the outer shoulder portion and/or of the inner shoulder portion have a depth that is reduced by comparison to lateral grooves devoid of a recess when present in the tire. Thus, in an embodiment wherein the outer shoulder portion and/or the inner shoulder portion comprise lateral grooves devoid of a recess; the depth of the lateral grooves devoid of a recess is ranging from 120% to 180% of the depth of the lateral groove comprising one or more recesses; preferably, from 130% to 170%; more preferably, from 140% to 160%; even more preferably, from 145% to 155%. For example, the depth of the one or more recesses in the lateral groove of the outer shoulder portion and/or of the inner shoulder portion is the same than the depth of the lateral grooves devoid of a recess.

In a preferred embodiment, both the outer shoulder portion 11 and the inner shoulder portion 15 have at least one lateral groove 17, 21 comprising one or more recesses 27. In an embodiment, both the outer shoulder portion 11 and the inner shoulder portion 15 have all the lateral grooves 17, 21 comprising one or more recesses 27. In an embodiment, both the outer shoulder portion 11 and the inner shoulder portion 15 have all lateral grooves 17, 21 comprising one single recess 27. In an embodiment, apart from the one or more recesses 27, the lateral grooves 17, 21 have a constant depth along their length.

Each recess 27 is extending on a part of the total length the lateral groove 17, 21 with the depth of the recess 27 being superior to the depth of the lateral groove 17, 21.

In a preferred embodiment not illustrated, one or more of the lateral grooves comprise a plurality of recesses. For example, one or more lateral grooves may comprise two to four recesses distributed along the length of the lateral grooves. In the embodiment depicted in Figures 1 and 2, the lateral grooves 17, 21 comprise a single recess 27. It is possible to mix lateral grooves having a plurality of recesses with lateral grooves having a single recess on the same tire. For example, the inner shoulder portion may show lateral grooves having a plurality of recesses whereas the outer shoulder portion shows lateral grooves having a single recess or vice-versa. It is also possible to mix, on the same shoulder portion, lateral grooves having a plurality of recesses and lateral grooves having a single recess in an alternate mode.

In a preferred embodiment, the lateral grooves 17, 21 comprising one or more recesses 27 of the outer shoulder portion 11 and/or of the inner shoulder portion 15 have a depth that is reduced by comparison to lateral grooves devoid of a recess when present in the tire. For example, the depth of the lateral grooves devoid of a recess is ranging from 120% to 180% of the depth of the lateral groove 17, 21 comprising one or more recesses 27; preferably, from 130% to 170%; more preferably, from 140% to 160%; even more preferably, from 145 to 155 %.

According to a preferred embodiment of the invention, the outside main circumferential groove 3 and/or the inside main circumferential groove 9 have a constant depth which is ranging from 5.8 mm to 7.7 mm; from example from 6.0mm to 7.5 mm; for example, from 6.2 mm to 7.3 mm; for example, from 6.5 mm to 7.0 mm, or from 6.7 mm to 7.0 mm.

For example, the depth of the lateral grooves 17 comprising one or more recesses 27 of the outer shoulder portion is ranging from 50% to 85% of the depth of the outside main circumferential groove 3; for example, from 55% to 85%, or from 60% to 85%, or from 60% to 80%, or from 60% to 75%, or from 60% to 70%, or from 65% to 75%. Additionally or alternatively, the depth of the lateral grooves 21 comprising one or more recesses 27 of the inner shoulder portion is ranging from 50% to 85% of the depth of the inside main circumferential groove 9; for example, 55% to 85%, or from 60% to 85%, or from 60% to 80%, or from 60% to 75%, or from 60% to 70%, or from 65% to 75%.

In a preferred embodiment, the cumulated length of the plurality of recesses in the lateral grooves or the length of the single recess 27 of the lateral grooves 17, 21 is ranging from 20% to 60% of the total lateral groove length in the footprint; preferably from 20% to 45%; more preferably from 25 to 40 %; and even more preferably from 28% to 35%.

The one or more recesses 27 may have the same or different length. For example, all the recesses 27 have the same length. For example, at least one of the lateral grooves comprises at least two recesses, and two of said recesses have different length. For example, the cumulated length of the one or more recesses 27 present in the lateral grooves 17 of the outer shoulder portion 11 is different from the cumulated length of the one or more recesses 27 present in the lateral grooves 21 of the inner shoulder portion 15. For example, the recesses of two lateral grooves of the outer shoulder portion (or of the inner shoulder portion) that are consecutive in the circumferential direction of the tire have different length; so lateral grooves with recesses of different length can be distributed in an alternate mode along the circumferential direction of the tire.

In a preferred embodiment, the depth of the one or more recesses 27 is ranging from 120% to 180% of the depth of the lateral groove 17, 21; preferably, from 130% to 170%; more preferably, from 140 to 160 %; even more preferably, from 145% to 155%. For example, all the recesses 27 have the same depth. For example, wherein the lateral grooves comprise at least two recesses, the recesses have a different depth. For example, the recesses of two consecutive lateral grooves in the circumferential direction one shoulder portion of the tire have different depth so lateral grooves with recesses of different depth can be distributed in an alternate mode along the circumferential direction of the tire.

According to a preferred aspect of the invention, one or more recesses 27 are placed at a distance of the internal ends of the lateral grooves 17, 21; and/or at a distance of the external ends of the lateral grooves 17, 21. For example, one or more recesses 27 are placed at a distance of the ends of the lateral grooves 17, 21. For example, one or more recesses are placed in a central position on the total lateral groove length in the footprint.

In a preferred embodiment, the one or more recesses 27 (i. e. the single recess or, in case of a plurality of recesses, the recess 27 that is closer to the internal end of the lateral groove) are placed at a distance from the internal end of the lateral grooves 17, 21 of at least 10 % of the total lateral groove length in the footprint; preferably at least 15%, more preferably, at least 20%, even more preferably at least 25% and most preferably at least 30%. For example, the one or more recesses 27 are placed at a distance from the internal end of the lateral grooves 17, 21 that is ranging from 10% to 35% of the total lateral groove length in the footprint; preferably from 20% to 30%.

In a preferred embodiment, the one or more recesses 27 (i. e. the single recess or, in case of a plurality of recesses, the recess 27 that is closer to the external end of the lateral groove) are placed at a distance from the external end of the lateral grooves 17, 21 of at least 10 % of the total lateral groove length in the footprint; preferably at least 15%, more preferably, at least 20 %, even more preferably at least 25% and most preferably at least 30%. For example, the one or more recesses 27 are placed at a distance from the external end of the lateral grooves 17, 21 that is ranging from 10% to 35% of the total lateral groove length in the footprint; preferably from 20% to 30%.

It is understood that, according to a preferred aspect of the present invention, the lateral grooves 17, 21 of the outer shoulder portion 11 and/or of the inner shoulder portion 15 comprises at least two parts and preferably three parts distributed along their length. The first part is extending from the internal end to a recess 27 (i. e. the single recess or a first recess), a second part that includes one or more recesses and an optional third part that extends from a recess to the external end. The first part and the optional third part are devoid of a recess.

In a preferred embodiment, at least one of the lateral grooves 17 of the outer shoulder portion 11 and/or the lateral grooves 21 of the inner shoulder portion 15 shows an extension 29 extending from its internal end to the outside main circumferential groove 3 (or inside main circumferential groove 9 respectively). This allows for improving the noise properties of the tire. The extension 29 has a width smaller than the width of the lateral groove 17, 21 to which it is connected. For example, the extension has a width that is at most 50% the width of the lateral groove; for example, at most 40%; for example, at most 30%.

For example, on each shoulder portion, the lateral grooves and the circumferential grooves form blocks each block is comprising one or more sipes 35, 37 extending in the width direction of the tire 1 and the extension 29 and the sipes 35, 37 have the same width. For example, the extension 29 of the lateral groove 17 of the outer shoulder portion 11 and/or of the lateral groove 21 of the inner shoulder portion 15 has a depth similar or inferior to the depth of the lateral groove from which it extends. In a preferred embodiment not shown, the extension of the lateral groove of the outer shoulder portion and/or of the lateral groove of the inner shoulder portion has a depth superior to the depth of the lateral groove from which it extends.

In a preferred embodiment, the outer shoulder portion 11 and/or the inner shoulder portion 15 comprises at least one narrow groove 31, 33 extending in the circumferential direction of the tire that is crossing the lateral grooves 17, 21. For example, the outer shoulder portion 11 and/or the inner shoulder portion 15 comprises a narrow groove 31, 33 extending in the circumferential direction of the tire that is crossing the lateral grooves 17, 21 in the first part of the lateral grooves 17, 21, i.e. in the part that is extending from the internal end of the lateral groove to a recess 27. Thus, the outer shoulder portion 11 may comprise a narrow circumferential groove 31 that divides the outer shoulder portion into two sub-portions namely a central outer shoulder portion and an outside outer shoulder portion wherein the one or more recesses of the lateral grooves are placed in the outside outer shoulder portion. Similarly, the inner shoulder portion 15 may comprise a narrow circumferential groove 33 that divides the inner shoulder portion into two sub-portions namely a central inner shoulder portion and an inside inner shoulder portion wherein the one or more recesses of the lateral grooves are placed in the inside inner shoulder portion. For example, at least one narrow circumferential groove 31, 33 has a width similar to the sipes 35, 37.

In a preferred embodiment, in the shoulder portions, blocks 23, 25 are formed by the lateral grooves 17, 21, the lateral edges and the circumferential grooves 3, 9. The blocks 23, 25 of the shoulder portions 11, 15 can be interrupted by the narrow circumferential groove 31, 33 that divides them is sub-blocks. Each block 23, 25 may comprise one or more sipes 35, 37 and the sipes 35, 37 are connecting the narrow circumferential groove 31, 33. In an embodiment, the sipes 35, 37 are distributed asymmetrically from one side to the other of said narrow circumferential groove 31, 33. For example, two sub-blocks of the same block have a different number of sipes; for example, the sub-block that is defined by a lateral edge has a number of sipes 35 that is superior to the number of sipes 37 present in the sub-block that is defined by a main circumferential groove. In an embodiment, the sipes 35 of the sub-block that is defined by a lateral edge and the sipes 37 the sub-block that is defined by a main circumferential groove are not aligned along the axial direction of the tire.

## Claims

1. A tire comprising a tread portion, the tread portion comprising a first shoulder portion (11), a central portion (13) and a second shoulder portion (15), the first shoulder portion (11) extending on an axially opposite side of the central portion (13) than the second shoulder portion (15), wherein a first main circumferential groove (3) extending in a circumferential direction of the tire (1) is disposed between the first shoulder portion (11) and the central portion (13), and a second main circumferential groove (9) extending in a circumferential direction of the tire (1) is disposed between the central portion (13) and the second shoulder portion (15), wherein each of the first and shoulder portions (11, 15) comprises lateral grooves (17, 21), wherein one or both of said first and second shoulder portions (11, 15) has at least one of said lateral grooves (17, 21) comprising a recess (27), wherein
(i) the aggregated length of the recess (27) in and along the respective lateral groove (17, 21) ranges from 20% to 60% of the total length of the respective lateral groove (17, 21) in the tire footprint, and wherein said recess (27) is located at a distance away from the axially inner end of the respective lateral groove (17, 21); and/or wherein
(ii) the radial depth of the recess (27) ranges from 120% to 180%, preferably 130% to 170% of the radial depth of the respective lateral groove (17, 21) at a position adjacent said recess (27), wherein the aggregated length of the recess (27) in and along the respective lateral groove (17, 21) is at least 20% of the total length of the respective lateral groove (17, 21) in the tire footprint, and wherein said recess (27) is located a distance away from the axially inner end of the respective lateral groove (17, 21); and/or wherein
(iii) the recess (27) is located a distance away from the axially inner end of the respective lateral groove (17, 21), said distance being at least 10% of the total length of the respective lateral groove (17, 21) in the footprint, and wherein the aggregated length of the recess (27) in and along the respective lateral groove (17, 21) is at least 20% of the total length of the respective lateral groove (17, 21) in the footprint;
wherein the footprint of the tire (1) being obtained according to ASTM F870-94:2016; and
wherein the recess (27) has a constant radial depth along its length in and along the respective lateral groove (17, 21); **characterized in that**
at least one lateral groove (17) of the first shoulder portion (11) has an extension (29) having a width smaller than the width of the lateral groove (17) extending from its axially inner end to the first main circumferential groove (3); and/or wherein at least one lateral groove (21) of the second shoulder portion (15) has an extension (29) having a width smaller than the width of the lateral groove (17) extending from its axially inner end to the second main circumferential groove (9).

2. The tire according to claim 1, wherein said lateral grooves (17, 21) have two ends in the footprint, namely an axially inner end and an axially outer end.

3. The tire according to claim 1 or 2, wherein in case of option i) and/or iii) of claim 1, the radial depth of the recess (27) is at least 120% of the depth of the respective lateral groove (17, 21) or ranges from 120% to 180% of the depth of the respective lateral groove (17, 21) or ranges from 130% to 170% of the depth of the respective lateral groove (17, 21).

4. The tire according to at least one of the previous claims, wherein the recess is located a distance away from the axially inner end of the respective lateral groove (17, 21) which is within a range of from 10% to 35% of the total length of the respective lateral groove (17, 21) in the tire footprint.

5. The tire according to claim 1, wherein the extension (29) of the lateral groove (17) of the first shoulder portion (11) and/or the extension (29) of the lateral groove (21) of the second shoulder portion (15) has a radial depth in a range of from 90% to 110% of the radial depth of the respective lateral groove (17, 21) from which it extends or has a radial depth larger than the radial depth of the respective lateral groove (17, 21) from which it extends.

6. The tire according to at least one of the previous claims, wherein the radial depth of the lateral groove (17, 21) comprising the recess (27) of the first shoulder portion (11) ranges from 60% to 85% of the radial depth of the first main circumferential groove (3); and/or wherein the radial depth of the lateral grooves (17, 21) comprising the recess (27) of the second shoulder portion (15) range from 60% to 85 % of the radial depth of the second main circumferential groove (9).

7. The tire according to at least one of the previous claims, wherein at least one of the first shoulder portion (11) and the second shoulder portion (15) has at least one lateral groove (17, 21) having only a single recess (27).

8. The tire according to at least one of the previous claims, wherein in case of option (i) or option (ii) of claim 1, the recess (27) is located a distance away from the axially inner end of the respective lateral groove (17, 21), said distance being at least 10% of the total length of the respective lateral groove (17, 21) in the footprint.

9. The tire according to at least one of the previous claims, wherein, apart from the recess (27), the lateral grooves (17, 21) have a constant radial depth along their length.

10. The tire according to at least one of the previous claims, wherein the recess (27) is located at a distance away from both the axially inner end and away from the axially outer end of the respective lateral groove (17, 21).

11. The tire according to at least one of the previous claims, wherein the recess (27) is located at a distance away the axially inner end of the respective lateral groove (17, 21) that is at least 20% of the total length of the respective lateral groove (17, 21) in the tire footprint.

## Patentansprüche

1. Reifen, der einen Laufflächenabschnitt umfasst, der einen ersten Schulterabschnitt (11), einen mittleren Abschnitt (13) und einen zweiten Schulterabschnitt (15) umfasst, wobei der erste Schulterabschnitt (11) sich auf einer Seite des mittleren Abschnitts (13) erstreckt, die sich axial gegenüber dem zweiten Schulterabschnitt (15) befindet, wobei eine erste sich in Umfangsrichtung des Reifens (1) erstreckende Hauptumfangsrille (3) sich zwischen dem ersten Schulterabschnitt (11) und dem mittleren Abschnitt (13) befindet, und wobei eine zweite sich in Umfangsrichtung des Reifens (1) erstreckende Hauptumfangsrille (9) sich zwischen dem mittleren Abschnitt (13) und dem zweiten Schulterabschnitt (15) befindet, wobei jeder der ersten und zweiten Schulterabschnitte (11, 15) seitliche Rillen (17, 21) umfasst, wobei einer oder beide der ersten und zweiten Schulterabschnitte (11, 15) mindestens eine der seitlichen Rillen (17, 21) hat, die einen Absatz (27) umfasst, wobei
(i) die aggregierte Länge des Absatzes (27) in der Reifenaufstandsfläche in und entlang der jeweiligen Seitenrille (17,21) von 20% bis 60% der Gesamtlänge der jeweiligen Seitenrille (17, 21) reicht, und wobei der Absatz (27) sich in einem Abstand von dem axial inneren Ende der jeweiligen Seitenrille (17, 21) befindet, und/oder wobei
(ii) die radiale Tiefe des Absatzes (27), an einer an den Absatz (27) angrenzenden Position, von 120% bis 180%, vorzugsweise 130% bis 170% der radialen Tiefe der jeweiligen seitlichen Rille (17, 21) reicht, wobei die aggregierte Länge des Absatzes (27) in der Reifenaufstandsfläche in und entlang der jeweiligen seitlichen Rille (17, 21) mindestens 20% der Gesamtlänge der jeweiligen seitlichen Rille (17, 21) beträgt, und wobei der Absatz (27) sich in einem Abstand von dem axial inneren Ende der jeweiligen seitlichen Rille (17, 21) befindet und/oder wobei
(iii) der Absatz (27) sich in einem Abstand von dem axial inneren Ende der jeweiligen Seitenrille (17, 21) befindet, wobei der Abstand in der Aufstandsfläche mindestens 10% der Gesamtlänge der jeweiligen Seitenrille (17, 21) beträgt, und wobei die aggregierte Länge des Absatzes (27) in und entlang der jeweiligen Seitenrille (17, 21) in der Aufstandsfläche mindestens 20% der Gesamtlänge der jeweiligen Seitenrille (17, 21) beträgt;
wobei die Aufstandsfläche des Reifens (1) gemäß ASTM F87094:2016 erhalten wird; und
wobei der Absatz (27) eine konstante radiale Tiefe entlang seiner Länge in und entlang der jeweiligen seitlichen Rille (17, 21) hat; **dadurch gekennzeichnet, dass**
mindestens eine seitliche Rille (17) des ersten Schulterabschnitts (11) eine Verlängerung (29) hat, die eine Breite hat, die kleiner ist als die Breite der Seitenrille (17), die sich von ihrem axial inneren Ende bis zu der ersten Hauptumfangsrille (3) erstreckt, und/oder wobei mindestens eine Seitenrille (21) des zweiten Schulterabschnitts (15) eine Verlängerung (29) hat, die eine Breite hat, die kleiner ist als die Breite der Seitenrille (17), die sich von ihrem axial inneren Ende bis zu der zweiten Hauptumfangsrille (9) erstreckt.

2. Reifen nach Anspruch 1, wobei die seitlichen Rillen (17,21) in der Aufstandsfläche zwei Enden, nämlich ein axial inneres Ende und ein axial äußeres Ende, haben.

3. Reifen nach Anspruch 1 oder 2, wobei im Falle der Option i) und/oder iii) des Anspruchs 1, die radiale Tiefe des Absatzes (27) mindestens 120% der Tiefe der jeweiligen seitlichen Rille (17, 21) beträgt oder von 120% bis 180% der Tiefe der jeweiligen seitlichen Rille (17, 21) reicht, oder von 130% bis 170% der Tiefe der jeweiligen Seitenrille (17, 21) reicht.

4. Reifen nach mindestens einem der vorhergehenden Ansprüche, wobei der Absatz sich in einem Abstand von dem axial inneren Ende der jeweiligen Seitenrille (17, 21) befindet, der in der Aufstandsfläche von 10% bis 35% der Gesamtlänge der jeweiligen Seitenrille (17, 21) reicht.

5. Reifen nach Anspruch 1, wobei die Verlängerung (29) der seitlichen Rille (17) des ersten Schulterabschnitts (11) und/oder die Verlängerung (29) der seitlichen Rille (21) des zweiten Schulterabschnitts (15) eine radiale Tiefe hat, die von 90% bis 110% der radialen Tiefe der jeweiligen lateralen Rille (17, 21) reicht, von der sie ausgeht, oder eine radiale Tiefe hat, die größer ist als die radiale Tiefe der jeweiligen lateralen Rille (17, 21), von der sie ausgeht.

6. Reifen nach mindestens einem der vorhergehenden Ansprüche, wobei die radiale Tiefe der seitlichen Rille (17, 21), die den Absatz (27) des ersten Schulterabschnitts (11) umfassen, von 60% bis 85% der radialen Tiefe der ersten Hauptumfangsrille (3) reicht; und/oder wobei die radiale Tiefe der seitlichen Rillen (17, 21), die den Absatz (27) des zweiten Schulterabschnitts (15) umfassen, von 60 % bis 85 % der radialen Tiefe der zweiten Hauptumfangsrille (9) reicht.

7. Reifen nach mindestens einem der vorhergehenden Ansprüche, wobei mindestens einer der ersten Schulterabschnitte (11) und der zweite Schulterabschnitt (15) mindestens eine seitliche Rille (17,21) hat, die nur einen einzigen Absatz (27) umfasst,

8. Reifen nach mindestens einem der vorhergehenden Ansprüche, wobei im Falle der Option (i) oder Option (ii) des Anspruchs 1, der Absatz (27) sich in einem Abstand von dem axial inneren Ende der jeweiligen seitlichen Rille (17, 21) befindet, wobei der Abstand in der Aufstandsfläche mindestens 10 % der Gesamtlänge der jeweiligen Seitenrille (17, 21) beträgt.

9. Reifen nach mindestens einem der vorhergehenden Ansprüche, wobei, abgesehen von dem Absatz (27), die Seitenrillen (17, 21) eine konstante radiale Tiefe entlang ihrer Länge haben.

10. Reifen nach mindestens einem der vorhergehenden Ansprüche, wobei der Absatz (27) sich in einem Abstand sowohl vom axial inneren Ende als auch vom axial äußeren Ende der jeweiligen seitlichen Rille (17, 21) befindet.

11. Reifen nach mindestens einem der vorhergehenden Ansprüche, wobei der Absatz (27) sich in einem Abstand von dem axial inneren Ende der jeweiligen seitlichen Rille (17, 21) befindet, der in der Reifenaufstandsfläche mindestens 20% der Gesamtlänge der jeweiligen seitlichen Rille (17, 21) beträgt.

## Revendications

1. Bandage pneumatique qui comprend une portion faisant office de bande de roulement, la portion faisant office de bande de roulement comprenant une première portion (11) faisant office d'épaulement, une portion centrale (13) et une deuxième portion (15) faisant office d'épaulement, la première portion (11) faisant office d'épaulement s'étendant sur un côté de la portion centrale (13), opposé, dans la direction axiale, à la deuxième portion (15) faisant office d'épaulement; dans lequel, une première rainure circonférentielle principale (3), qui s'étend dans une direction circonférentielle du bandage pneumatique (1), est disposée entre la première portion (11) faisant office d'épaulement et la portion centrale (13), et une deuxième rainure circonférentielle principale (9), qui s'étend dans une direction circonférentielle du bandage pneumatique (1), est disposée entre la portion centrale (13) et la deuxième portion (15) faisant office d'épaulement ; dans lequel chacune desdites première et deuxième portion (11, 15) faisant office d'épaulements comprend des rainures latérales (17, 21) ; dans lequel une desdites première et deuxième portion (11, 15) faisant office d'épaulements ou les deux possède(nt) au moins une desdites rainures latérales (17,21) comprenant un évidement (27) ; dans lequel
(i) la longueur globale de l'évidement (27) dans et le long de la rainure latérale respective (17, 21) se situe dans une plage qui représente de 20 % à 60 % de la longueur totale de la rainure latérale respective (17, 21) dans l'empreinte du bandage pneumatique; et dans lequel ledit évidement (27) est situé à distance de l'extrémité interne, dans la direction axiale, de la rainure latérale respective (17, 21) ; et/ou dans lequel
(ii) la profondeur radiale de l'évidement (27) se situe dans une plage qui représente de 120 % à 180 %, de préférence de 130 % à 170 % de la profondeur radiale de la rainure latérale respective (17, 21) à un endroit adjacent audit évidement (27) ; la longueur globale de l'évidement (27) dans et le long de la rainure latérale respective (17, 21) représente au moins 20 % de la longueur totale de la rainure latérale respective (17, 21) dans l'empreinte du bandage pneumatique ; et dans lequel ledit évidement (27) est situé à distance de l'extrémité interne, dans la direction axiale, de la rainure latérale respective (17, 21) ; et/ou dans lequel
(iii) l'évidement (27) est situé à distance de l'extrémité interne, dans la direction axiale, de la rainure latérale respective (17, 21), ladite distance représentant au moins 10 % de la longueur totale de la rainure latérale respective (17, 21) dans l'empreinte ; et dans lequel la longueur globale de l'évidement (27) dans et le long de la rainure latérale respective (17, 21) représente au moins 20 % de la longueur totale de la rainure latérale respective (17, 21) dans l'empreinte ;
dans lequel on obtient l'empreinte du bandage pneumatique (1) conformément à la norme ASTM F870-94:2016 ; et
dans lequel l'évidement (27) possède une profondeur radiale constante sur sa longueur dans et le long de la rainure latérale respective (17, 21) ; **caractérisé en ce que**
au moins une rainure latérale (17) de la première portion (11) faisant office d'épaulement possède un prolongement (29) dont la largeur est inférieure à la largeur de la rainure latérale (17) qui s'étend à partir de son extrémité interne, dans la direction axiale, jusqu'à la première rainure circonférentielle principale (3) ; et/dans lequel au moins une rainure latérale (21) de la deuxième portion (15) faisant office d'épaulement possède un prolongement (29) dont la largeur est inférieure à la largeur de la rainure latérale (17) qui s'étend à partir de son extrémité interne, dans la direction axiale, jusqu'à la deuxième rainure circonférentielle principale (9).

2. Bandage pneumatique selon la revendication 1, dans lequel lesdites rainures latérales (17, 21) possèdent deux extrémités dans l'empreinte, plus précisément une extrémité interne, dans la direction axiale, et une extrémité externe, dans la direction axiale.

3. Bandage pneumatique selon la revendication 1 ou 2, dans lequel, dans le cas de l'option i) et/ou iii) de la revendication 1, la profondeur radiale de l'évidement (27) représente au moins 120 % de la profondeur de la rainure latérale respective (17, 21) ou se situe dans une plage qui représente de 120 % à 180 % de la profondeur de la rainure latérale respective (17, 21) ou se situe dans une plage qui représente de 130 % à 170 % de la profondeur de la rainure latérale respective (17, 21).

4. Bandage pneumatique selon au moins une des revendications précédentes, dans lequel l'évidement est situé à une distance de l'extrémité interne, dans la direction axiale, de la rainure latérale respective (17, 21), qui se situe dans une plage qui représente de 10% à 35 % de la longueur totale de la rainure latérale respective (17, 21) dans l'empreinte du bandage pneumatique.

5. Bandage pneumatique selon la revendication 1, dans lequel le prolongement (29) de la rainure latérale (17) de la première portion (11) faisant office d'épaulement et/ou le prolongement (29) de la rainure latérale (21) de la deuxième portion (15) faisant office d'épaulement possède une profondeur radiale qui se situe dans une plage qui représente 90 % à 110 % de la profondeur radiale de la rainure latérale respective (17, 21) à partir de laquelle il s'étend ou possède une profondeur radiale qui est supérieure à la profondeur radiale de la rainure latérale respective (17, 21) à partir de laquelle il s'étend

6. Bandage pneumatique selon au moins une des revendications précédentes, dans lequel la profondeur radiale de la rainure latérale (17, 21) qui comprend l'évidement (27) de la première portion (11) faisant office d'épaulement se situe dans une plage qui représente de 60 % à 85 % de la profondeur radiale de la première rainure circonférentielle principale (3) ; et/ou dans lequel la profondeur radiale de la rainure latérale (17, 21) qui comprend l'évidement (27) de la deuxième portion (15) faisant office d'épaulement se situe dans une plage qui représente de 60 % à 85 % de la profondeur radiale de la deuxième rainure circonférentielle principale (9).

7. Bandage pneumatique selon au moins une des revendications précédentes, dans lequel au moins une portion choisie parmi la première portion (11) faisant office d'épaulement et la deuxième portion (15) faisant office d'épaulement possède au moins une rainure latérale (17, 21) qui ne possède qu'un seul évidement (27).

8. Bandage pneumatique selon au moins une des revendications précédentes, dans lequel, dans le cas de l'option (i) ou de l'option (ii) de la revendication 1, l'évidement (27) est situé à une distance de l'extrémité interne, dans la direction axiale, de la rainure latérale respective (17, 21), ladite distance représentant au moins 10 % de la longueur totale de la rainure latérale respective (17, 21) dans l'empreinte.

9. Bandage pneumatique selon au moins une des revendications précédentes, dans lequel, sans compter l'évidement (27), les rainures latérales (17, 21) possèdent une profondeur radiale constante sur leur longueur.

10. Bandage pneumatique selon au moins une des revendications précédentes, dans lequel l'évidement (27) est situé à une distance à la fois de l'extrémité interne, dans la direction axiale, et de l'extrémité externe, dans la direction axiale, de la rainure latérale respective (17, 21).

11. Bandage pneumatique selon au moins une des revendications précédentes, dans lequel l'évidement (27) est situé à une distance de l'extrémité interne, dans la direction axiale, de la rainure latérale respective (17, 21), qui représente au moins 20% de la longueur totale de la rainure latérale respective (17, 21) dans l'empreinte du bandage pneumatique.
